# EUROPEAN PATENT APPLICATION

(11) **EP 3 910 626 A1**
(43) Date of publication of application: **17.11.2021**
(21) Application number: 20174205.3
(22) Date of filing: 12.05.2020
(51) Int. Cl.: G10L 15/22

(54) **PRESENTATION CONTROL**

(71) Applicant: Deutsche Telekom AG, 53113 Bonn (DE)
(72) Inventor: SÁNDOR, Roland, 1094 Budapest (HU); IHÁSZ, Péter Lajos, 1214 Budapest (HU); SAJTOS, János, 4029 Debrecen (HU); LÁSZLÓ, Tamás, 2230 Gyömrö (HU); NÉMETH, Tibor, 8230 Balatonfüred (HU); KUSMIERZ, Ernest, 22-600 Tomaszow Lubelski (PL); CECOT, Maciej, 05-800 Pruszków (PL); JONCA, Wlodzimierz, 00-382 Warszawa (PL); LIS, Ewa, 05-860 Plochocin (PL); WOJDYTTO, Piotr, 01-551 Warszawa (PL); LAMBERT, Sascha, 65510 Idstein (DE)
(74) Representative: Vossius & Partner Patentanwälte Rechtsanwälte mbB

(57) **Abstract**

A presentation control method and system, wherein the method comprises the steps of: continuously running a voice to text transformation of a voice input from a user; detecting at least one spoken expression in the voice input; selecting a specific presentation item out of a set of presentation items based on the detected spoken expression; and executing an animation and/or change to the presentation item.

## Description

The invention relates to a computer implemented method and system for controlling a presentation.

Automated Speech Recognition, ASR, and Natural Language Processing, NLP, - related machine learning techniques have matured significantly in recent years. These techniques can now be implemented into applications with real-time functions.

Natural language processing is described e.g. in "A Simple Data Augmentation Method for Automatic Speech Recognition" available via https://arxiv.org/abs/1904.08779. Gesture recognition is described e.g. in " US 6128003 A. A Question & Answering System in described, e.g. in US 7844598 B2. Word embedding is described, e.g. in "Deep contextualized word representations" available via https://arxiv.org/abs/1802.05365. The skilled person is aware of alternative implementations of the above mentioned techniques.

It is a core idea of the present invention to process speech and gesture input from a user with machine learning- based ASR, i.e. speech-to-text, NLP, i.e. word/sentence embedding, vector similarity based phrase-matching, and Computer Vision, i.e. movement detection, techniques to assist a user in creating and controlling presentation items during a presentation.

During presentations it is often difficult to switch back and forth, jump to a specific presentation item. Control devices, such as a pointer, mouse or keyboards are not efficient and not fast enough during presentations.

For a presenter it is important to focus on the audience and on his thoughts/speech and not wasting time with clicking to find the right presentation item.

Hereinafter the terms presentation and slide show are used. The terms overlap as a slide show is a form of a presentation. A slide of a slide show is a presentation item. However, the invention is not limited to a slide show but encompasses all possible forms of a presentation in which a speech or talk is given to an audience in order to present and/or explain some subject-matter, e.g. a new product, idea, or piece of work. A presentation item is preferably a component of a presentation more preferably the presentation of a visual content. The presentation item is preferably provided from a digital storage. Typically multiple presentation items are stored together in a presentation file. Hereinafter the term presentation is also used to refer to the presentation file. A presentation file may also comprise further content.

It is an object of the present invention to provide a method and system for an improved control of a presentation. This object is solved by the subject-matter of the independent claims. The dependent claims relate to further aspects of the invention.

According to an aspect of the invention there is provided a presentation control method, comprising the steps of: continuously running a voice to text transformation of a voice input from a user; detecting at least one spoken expression in the voice input; selecting a specific presentation item out of a set of presentation items based on the detected spoken expression; and executing an animation and/or change to the presentation item.

According to a further aspect of the invention the method further comprises the steps of: capturing a video input of the user; detecting at least one gesture of the user in the video input; selecting a control command for the presentation based on the detected gesture; and triggering an animation and/or the execution of the control command.

In an embodiment of the invention, the method is further comprising the step of continuously transcribing the voice input into a transcription of the presentation and/or using a word-embedding for the detecting at least one spoken expression, preferably for detecting at least one slide that contains semantically similar content to the spoken expression.

In an embodiment of the invention, the method is further comprising the steps of: capturing a voice input from the user; transforming the voice input into a search phrase transferring the search phrase to a web search engine; displaying the search results in a browser; and returning to display the presentation, when receiving a return command via a further voice input.

In an embodiment of the invention, selecting a specific presentation item out of a set of presentation items based on the spoken expression comprises searching in the transcription of the set of presentation items for an expression matching the detected spoken expression and selecting the most relevant slide based on the matching expression.

In an embodiment of the invention, the method is further comprising the steps of capturing a voice input from the user; receiving a query for a search for a presentation item; searching in a database comprising a least one presentation file and a transcription thereof for specific presentation items comprising a matching expression; opening the presentation file from the database comprising the most relevant specific presentation item; and displaying the most relevant specific slide.

In an embodiment of the invention, continuously running a voice to text transformation of a voice input from a user and/or capturing a voice input from the user comprises applying a noise filter and/or employing a trained language model for speech capturing and transcription.

In an embodiment of the invention, the steps of continuously running a voice to text transformation of a voice input from a user and/or capturing a voice input from the user are performed by a cloud service via an application programming interface.

In an embodiment of the invention, at least one of the steps of continuously running a voice to text transformation of a voice input from a user, capturing a voice input from the user, or transcribing a voice input from a user are performed by a cloud service via an application programming interface.

According to an aspect of the invention there is provided a presentation control system comprising: voice to text transformation means for continuously running a voice to text transformation of a voice input from a user; detection means for detecting at least one spoken expression in the voice input; selection means for selecting a specific presentation item out of a set of presentation items based on the detected spoken expression; and means for executing an animation and/or change to the presentation item, preferably configured to execute steps of the method according to any one of the preceding aspects and embodiments.

In an embodiment of the invention the system is further comprising: sensor means for capturing a voice input from a user and/or sensor means for capturing a video input of the user; and processing means, storage means, and communication means configured to execute the steps of the method according to any one of the preceding aspects and embodiments.

According to an aspect of the invention there is provided a presentation coaching system comprising: a presentation control system according to any one of the preceding aspects and embodiments, preferably configured to receive a least one transcript of a presentation as input.

According to an aspect of the invention there is provided a presentation item reusage system comprising: a presentation control system according to any one of the preceding aspects and embodiments, preferably configured to receive a least one transcript of a presentation as input.

According to an aspect of the invention there is provided a computer program comprising instructions to cause the system of any one of the preceding aspects to execute the steps of the method according to any one of the preceding aspects and embodiments.

According to an aspect of the invention there is provided a computer-readable medium having stored thereon the computer program of the preceding aspect.

In a preferred embodiment the invention is implemented as a plug-in for a presentation software. Said plug-in is applicable during presentations on conferences, roadshows, meetings etc.

It is a further general aspect of the invention that a presentation item-search function is utilized to update/recycle presentation items for example existing slides during a presentation preparation phase. With the help of a Question-Answer system presentations can be complemented with further relevant information.

It is a further general aspect of the invention that a presentation item specification in terms of switching to a specific presentation item is based on: 1) position, i.e. previous item, next item, etc; 2) item number; and/or 3) content of the item.

It is a further general aspect of the invention to continuously run voice to text, transcribing and embedding the spoken expressions, then matching them with the textual content and titles of the presentation items.

The core system according to the invention is configured to move to the presentation item which contains the matched expressions. The core system according to the invention is configured to use word -embeddings, i.e. a context aware vectorization technique, to enable the recognition of synonyms based on vector similarity. It is noted that the term "word-embedding" refers to the technique and is not limited to a single word as the smallest unit, it also encompasses sentences and phrases.

It is a further general aspect of the invention to navigate based on in-built commands for disambiguation/fast tracking: "Slide XYZ", "next slide", "go back", etc. According to the invention inbuilt-commands are input via gestures, through complementing the system with a gesture recognition sub-system.

It is a further general aspect of the invention that the system can be further augmented with a web-search-based Question & Answering sub-system, enabling the user to enhance their presentation with real-time content search from the internet.

The Automatic Speech Recognition based, ASR-based, core system with the extension of the above-mentioned sub-systems would constitute a personal assistant which could be utilized for the purpose of extensively assisting in presentations.

The present invention has among others the advantage of preventing loss of time and loss of the attention of an audience during a presentation.

### Brief Description of the Drawings

The above-described objects, advantages and aspects of the present invention, as well as others, will be more readily understood from the following detailed description of certain preferred embodiments of the invention, when considered in conjunction with the accompanying drawings in which:
- Fig. 1: shows a flowchart of a method according to a first embodiment of the present invention;
- Fig. 2: shows a detailed flowchart of navigation with gesture according to the embodiment shown in Fig. 1;
- Fig. 3: shows a detailed flowchart of navigation with speech according to the embodiment shown in Fig. 1;
- Fig. 4: shows a detailed flowchart of a semantic search according to the embodiment shown in Fig. 1;
- Fig. 5: shows a flowchart of a method according to a second embodiment of the present invention.
- Fig. 6: shows a detailed flowchart of an online search system according to the embodiment of Fig. 5
- Fig. 7: shows a detailed flowchart of navigation with speech according to the embodiment shown in Fig. 5
- Fig. 8: shows a detailed flowchart of a semantic search according to the embodiment shown in Fig. 5;
- Fig. 9: shows a detailed flowchart of a coaching system according to the embodiment shown in Fig. 5; and
- Fig. 10: shows a detailed flowchart of a slide reusage system according to the embodiment shown in Fig. 5;

### Detailed Description of the Drawings

Hereinafter, embodiments disclosed in this specification will be described in detail with reference to the accompanying drawings. In this specification, the same or equivalent components may be provided with the same or similar reference numbers even in different embodiments, and description thereof will not be repeated. A singular representation may include a plural representation unless it represents a definitely different meaning from the context. In describing the present invention, if a detailed explanation for a related known technology or construction is considered to unnecessarily divert the gist of the present disclosure, such explanation has been omitted but would be understood by those skilled in the art. It should be noted that the attached drawings are provided to facilitate understanding of the embodiments disclosed in this specification, and should not be construed as limiting the technical idea disclosed in this specification by the attached drawings.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components.

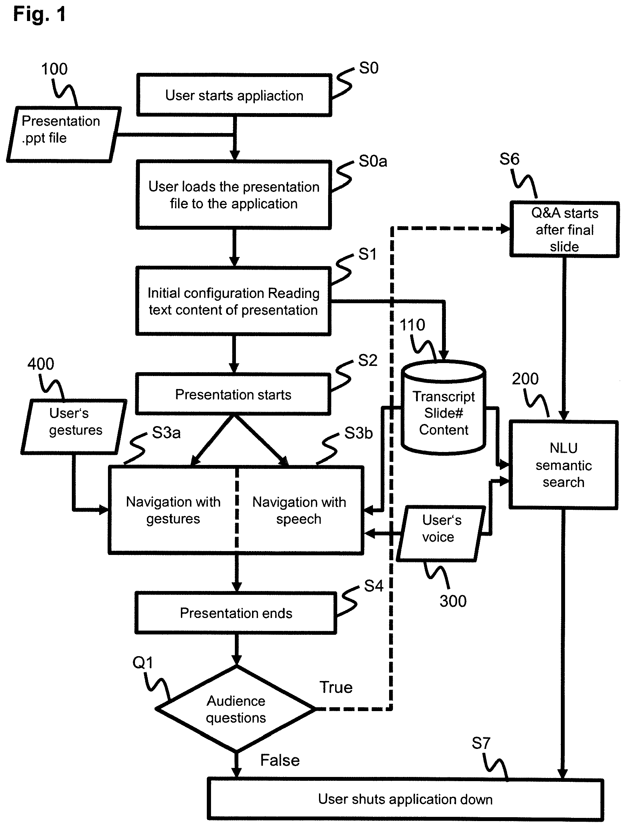

Fig. 1 shows a flowchart of a method according to a first embodiment of the present invention. In a first step S0 the presentation application is started. In a next step S0a a user loads a presentation file 100 to the presentation application, for example a MS PowerPoint (a trademark of Microsoft Corporation) presentation file.

In an initial configuration step S1, the user is reading the presentation text, preferably the text content of a specific presentation item, for each presentation item. In this step a transcript 110 for the content of each presentation item is generated and stored. This step is optional in case no transcript 110 is already stored.

In a next step S2, the presentation is started. During the presentation the presentation items can be controlled via navigation with gestures step S3a and/or navigation with speech step S3b. Additionally, in a preferred embodiment the presentation items can be also controlled via a control method using any common input means, such as a pointer, a keyboard, or a mouse.

For controlling via navigation with gestures, step S3a the gestures 400 of the user are captured via suitable sensor means, preferably a camera, and processed via suitable processing means. For controlling via navigation with speech, step S3b the voice 300 of the user is captured via suitable sensor means, preferably a microphone, and processed via suitable processing means.

In a next step S4, the presentation is ended. In question step Q1 it is determined whether or not the audience has questions, alternatively or additionally it is determined whether a Question and Answer phase, Q&A, is requested by the user. In the case that the audience has questions and/or the user requests a Q&A the Q&A starts after the final presentation item in step S6. In case of no questions and/or the user requests no Q&A the user shuts down the presentation application in step S7.

In the Q&A a Natural Language Understanding technique utilizing semantic search, NLU semantic search, 200 is preformed to allow the user to control the presentation during Q&A. The transcript 110 and/or the voice 300 are input into the NLU semantic search 200.

After the Q&A is completed, preferably by a respective input of the user, the application is shut down in step S7.

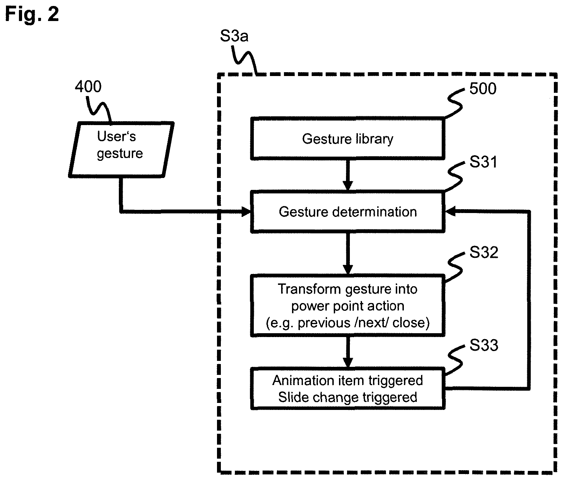

Fig. 2 shows a detailed flowchart of navigation with gesture, step S3a according to the embodiment shown in Fig. 1. A gesture of the user 400 is captured by a suitable sensor means, preferably a laptop camera or any color webcam attached via USB port. The gesture is then determined in step S31, preferably based on a gesture library 500.

After determining of the gesture S31 the gesture is transformed into a presentation action in step S32. Presentation actions comprise any control command to the presentation application, e.g. next presentation item, previous presentation item, close presentation or any MS PowerPoint (trademark of Microsoft Corporation) action. Presentation actions may also comprise further control commands available to the user, e.g. open different application, play a sound and/or video, control audio or video equipment and such.

The presentation action is then triggering a control command in the presentation application and/or presentation system in step S33. After a gesture has been processed in steps S31, S32 and S33 the next gesture is processed.

In a preferred embodiment of the invention, the application and/or system according to the invention is running and monitoring or listening to user's movements through a camera. In other words, the video from e.g. the laptop camera is captured in real time and the gestures occurring in the video frame are than processed in real time. The navigation with gesture S3a functionality is configured to support the user to navigate between slides with his own gestures. The application and/or system is configured to capture to recognize in real time the gesture on the video frame, i.e. the user's gesture and associate it with the closest predefined gesture stored in the gesture library 500. The associated gesture is transformed into at least one command e.g.: previous, next, close. Then application and/or system triggers the corresponding action in the presentation application, for example MS PowerPoint (trademark of Microsoft Corporation), preferably in presentation mode of said presentation application, e.g. changes the slide to the previous, next, or closes the presentation mode. After the action has been triggered and the slide has been changed the application and/or system continues monitoring or listening to user's gestures. The cycle starts from the beginning.

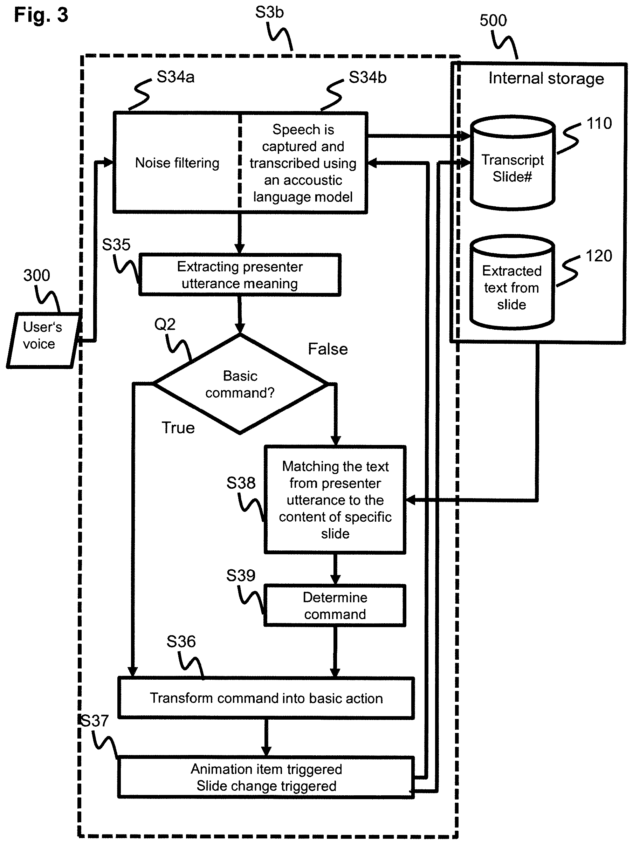

Fig. 3 shows a detailed flowchart of navigation with speech, step S3b according to the embodiment shown in Fig. 1. The voice 300 of a user is captured with suitable sensor means, e.g. a microphone of a mobile device, a microphone of a laptop computer, or a dedicated microphone. The captured voice 300 is noise filtered, step S34a and the speech is captured and transcribed using an acoustic language model in step S34b. The transcription results are preferably stored in an internal storage 500 to the transcription of the presentation item 110. In other words, the processing in steps S34a and S34b as in step S1, i.e. the initial configuration, and S3b, i.e. the navigation with speech. Preferably the transcript 110 of a presentation item is continuously improved by one or more additional transcriptions.

After the transcription the meaning of the presenter's utterance is extracted in step S35. Based on the extracted meaning in Q2 it is decided whether the voice input was a basic command or not. In case of a basic command, the basic command is transformed into at least one corresponding presentation action in step S36. Preferably, the same presentation actions as discussed with respect to navigation with gesture, step S3a are available for navigation with speech S3b. The presentation action is then triggering a control command in the presentation application and/or presentation system in step S37.

In case no basic command is determined, the text of the utterance is matched S38 to the content of a specific presentation item. The matching S38 is performed based on an input from the internal storage 500 of the application and/or system. The internal storage comprises the transcript 110 of the presentation items and extracted text 120 from the presentation items.

After the matching in step S38, a command is determined in step S39 based on the matching result. The command is then transformed into at least one corresponding presentation action in step S36. The presentation action is then triggering a control command in the presentation application and/or presentation system in step S37.

After a speech has been processed in steps S35, S36, S37, and S38 the next speech is processed. Furthermore, in a preferred embodiment, feedback is provided to the internal storage, preferably to the transcript 110.

In an embodiment of the invention, it is a prerequisite condition for navigation with speech S3b that the application/system is running and listening to user's voice 300. A presentation is loaded and the transcription 110 and the extracted textual 120 content are stored in the internal storage 500.

In a preferred embodiment of the invention, the navigation with speech S3a functionality is configured to support the user to navigate between the slides based on their own voice. The application and/or system is configured to capture the user's voice 300 and to filter S34a it from potential noises. The filtered speech is captured and transcribed S34b based on an acoustic language model.

The transcription 110 will be stored in an internal storage 500 as a dataset and labeled with the slide number of the presentation where the speech, or preferably a phrase was spoken. This will be used later to allow further, advanced navigation.

The transcription S34b is then used to extract the meaning of the utterance S35. If the user used words like "previous, next, start, end etc." the speech will be declared as a basic command in Q2. The application and/or system transforms these basic commands into basic presentation actions and shifts the slide accordingly or starts/stops the presentation.

If the user used a longer phrase like "I would like to go to the slide where I was talking about high-speed train networks in Europe" the speech will be compared with the transcript 110 and textual content 120 in the internal storage 500. The matching step S38 returns the slide number with the highest probability. The slide number is then used as input for determining a basic presentation command and the presentation application jumps to the specific slide.

After the slide change has been initiated, the application and/or system stores in the dataset the current slide number and continues listening to user's voice. The cycle starts from the beginning.

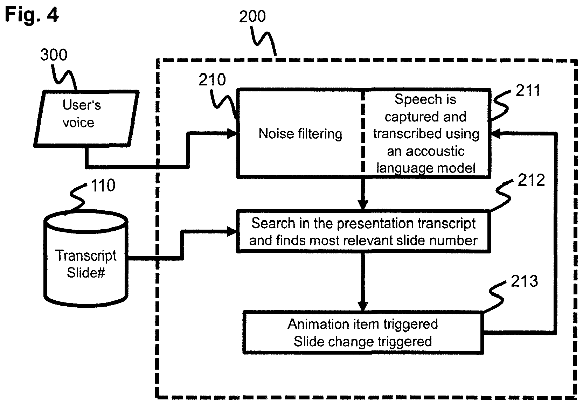

Fig. 4 shows a detailed flowchart of a semantic search 200 according to the embodiment shown in Fig. 1. The user voice 300 captured via suitable sensor means. The captured voice is noise filtered 210 and the speech is captured and transcribed using an acoustic language model 211. In a next step, a search is performed in the transcript 110 of the presentation and a most relevant presentation item is determined 212 based on the search. The semantic search is thus using the transcript 110 from the internal storage 500 as an input.

Based on the search result, a presentation action is then triggering 213 a control command in the presentation application and/or presentation system.

In a preferred embodiment, it is a prerequisite condition for a semantic search 200 that the application and/or system is running and listening to user's voice 300; a presentation is running; and the user has started presenting.

In a preferred embodiment of the invention, the transcripts 110 with slide numbers are stored in internal storage 500. The semantic search 200 is configured to allow the user to perform an advanced search within slides based on the transcript 110 of user's voice 300.

In a preferred embodiment, through the semantic search 200 the system also allows for specific content to be found even if it is phrased differently than it is written in the slide but holds the same semantic meaning. Even images can be searched with this method, which has only synonyms of the speech input as their captures.

The application/system is configured to capture the user's voice 300 and to filter 210 it from potential noises. The filtered speech is captured and transcribed 211 based on an acoustic language model. The transcript will be compared with the transcript 110 from internal storage 500 and gives in return a matching slide number. The slide number is the input for determination of a basic presentation command and the presentation application jumps to the specific slide. After the slide change has been initiated, the application and/or system continues to listen to user's voice 300. The cycle starts from the beginning.

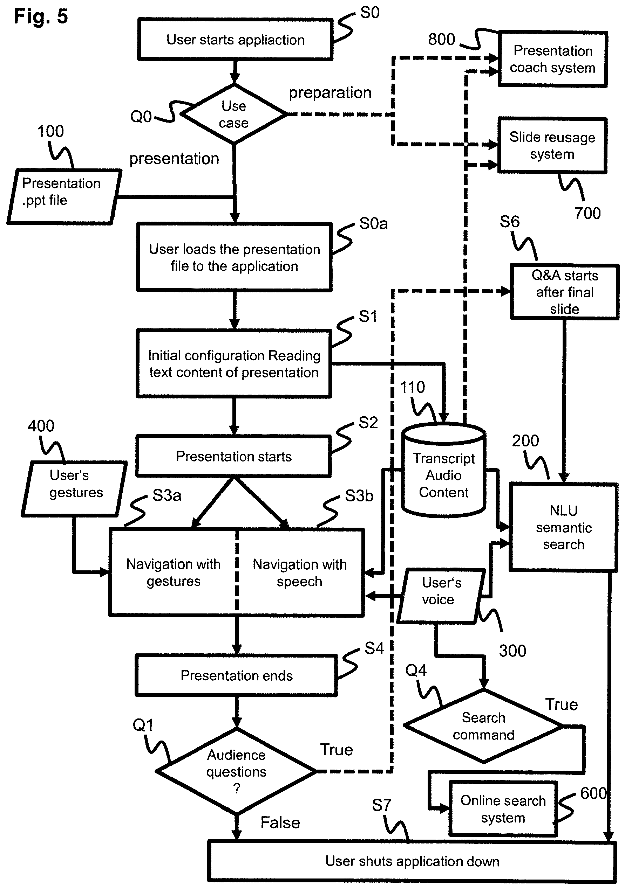

Fig. 5 shows a flowchart of a method according to a second embodiment of the present invention. This embodiment is based on the first embodiment and features of the second embodiment, which have already been described with respect to the first embodiment, are omitted.

The core idea of the second embodiment is to improve the core system of the first embodiment by improved sub-systems and additional functionalities.

The approach extends the original process flow in terms that it makes the system capable not only to support the user during the presentation, but also in supporting the user during a preparation phase with functionalities like presentation coaching, slide reusage.

The improvements and additional functionalities can be all considered optional but preferred. The skilled person realizes that further embodiments of the invention comprise different combinations of said improvements and functionalities, unless they are functionally interlinked.

After the start of the application and/or system S0 the use case is determined Q0. In case a preparation is determined in Q0 a presentation coaching system 800 and/or a presentation item reusage system 700 is used for preparation of a presentation. In case of a presentation is determined in Q0 step loading of a presentation file is performed in step S0a.

The presentation coaching system 800 and the presentation item reusage system 700, also referred to as a slide reusage system 700, are based on the transcript 110 as input.

Furthermore, when a search command is determined in step Q4 based on the user's voice 300 an online search system 600 is employed.

The remaining steps S1, S2, S3a, S3b, S4, S6 and S7 are similar to the steps of the first embodiments. Differences are discussed in detail below.

In other words, the second embodiment derives from the first embodiment in terms that it is not focusing only on supporting the user during the presentation, but also in preparation of a presentation with new functionalities like presentation coaching and slide reusage. Furthermore, the second embodiment has a different approach related to speech processing. Instead of local transcription it uses cloud based speech recognition services through APIs and it provides a speech-based online search support during the presentation. All differences will be detailed below.

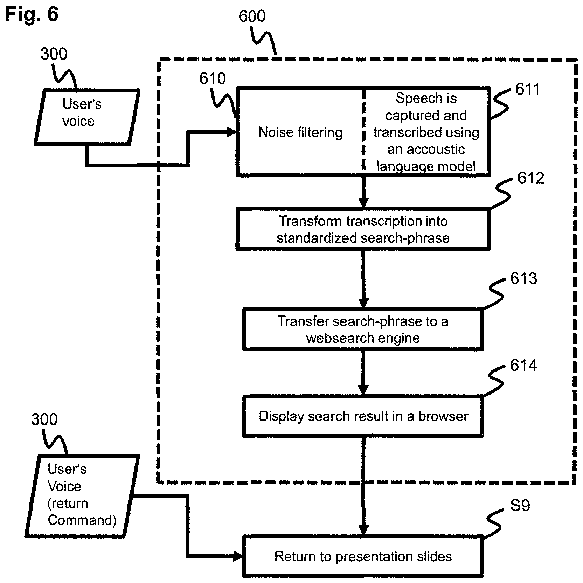

Fig. 6 shows a detailed flowchart of an online search system according to the embodiment of Fig. 5. In case a search command has been determined in Q4 the online search system 600 is employed. The user voice is captured via suitable sensor means. The captured voice is then noise filtered 610 and the speech is captured and transcribed 611 from the voice 300 preferably using an acoustic language model.

The transcribed speech 611 is transformed into a standardized search phrase 612. The search phrase is then transferred 613 to a search engine, preferably a web search engine. The search results are displayed 614, preferably in a browser.

After the search result has been displayed and/or a return command has been determined from the voice 300, the application and/or system returns to the presentation.

In an embodiment of the invention, it is a prerequisite condition for an online search 600 that the application and/or system is connected to the internet. The online search system 600 allows the user to perform hands-free online search, e.g. an image search, preferably using Google (trademark), during presentation to further elaborate on a given subject.

In an embodiment of the invention the application and/or system is configured to capture the user's voice 300 and filter 610 it from potential noises. The filtered speech will be captured and transcribed 611 based on an acoustic language model.

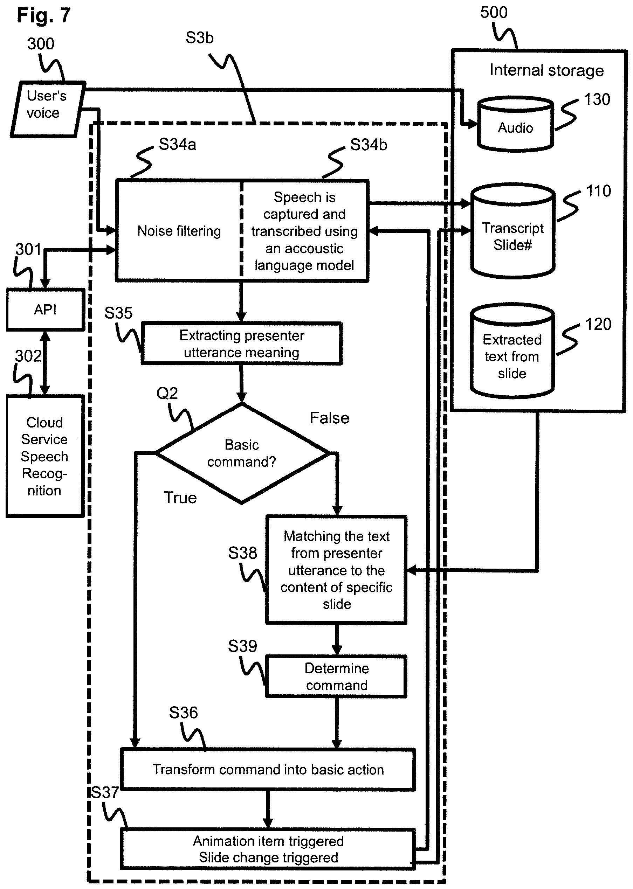

In a preferred embodiment, an application, programming interface, API, is used for this transcription, cf. Fig. 7.

In an embodiment of the invention, the transcript will be transformed into a standardized search-phrase 612 and put into a web search engine 613. The browser displays search results.

In an embodiment of the invention, the user returns to presentation items or presentation slides via a voice command 300.

Fig. 7 shows a detailed flowchart of navigation with speech according to the embodiment shown in Fig. 5. The core of the embodiment is based on what is shown in Fig. 3. However, an API 301 is employed for the steps of noise filtering S34a and/or speech capturing and transcription. The API 301 is connected to a cloud service for speech recognition 302. After the speech recognition 302 is completed, the API 301 returns the transcribed text. Furthermore, an audio 130 of the user's voice 300 is stored in the internal storage.

In an embodiment of the invention, it is a prerequisite condition for navigation with speech that the application and/or system is running and listening to user's voice 300; a presentation is loaded and extracted textual content is stored in internal storage 500. Furthermore, the application and/or system are connected to the internet.

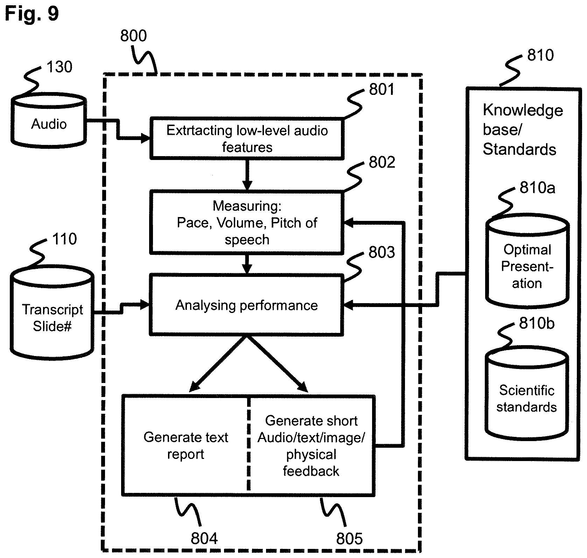

The navigation with speech S3b functionality is configured to support the user to navigate between the presentation items or presentation slides simply with his/her own voice. In a preferred embodiment, additionally or alternatively, it records the user's voice 300 in an audio format 130 as an input for a coaching system, cf. Fig. 9.

In an embodiment of the invention, the application and/or system is configured to capture the user's voice 300 and filter it from potential noise S34a. The filtered speech will be transmitted through an API 301 to a cloud based online speech recognition service which transforms the speech and returns it in text format, i.e. a transcription.

The transcription 110 will be stored in an internal storage 500 and labeled with the slide number of presentation where the phrase was spoken. In a preferred embodiment this will be used later to allow further, preferably advanced navigation.

The meaning of the utterance is extracted based on the transcription 110. If the user used words like "previous, next, start, end etc." it will be declared as a basic command in Q2. The presentation application and/or system is configured to transform these basic commands into one or more basic actions S36 and to shift the slide accordingly and/or start/stop the presentation.

If the user used a longer phrase like "I would like to go to the slide where I was talking about high-speed train networks in Europe" the phrase will be compared with the transcript 110 and textual content 120 in the internal storage 500 and the slide number with highest probability is returned in S38. The slide number is the input for determining a basic command S39 and the presentation application jumps to the specific slide accordingly and/or starts/stops the presentation.

After an action has been initiated, the application is configured to store in the internal storage or dataset the current slide number and continues to listen to user's voice 300. The cycle starts from the beginning.

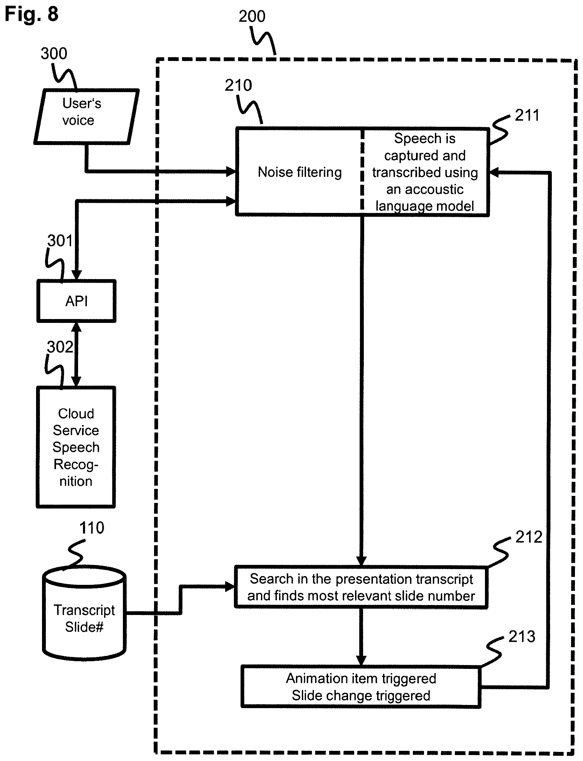

Fig. 8 shows a detailed flowchart of a semantic search according to the embodiment shown in Fig. 5. The core of the embodiment is based on what is shown in Fig. 4. However, an API 301 is employed for noise filtering 210 and/or speech capturing and transcription 211. The API 301 is connected to a cloud service for speech recognition 302. After the speech recognition 302 is completed, the API 301 returns the transcribed text.

In an embodiment of the invention, it is a prerequisite condition for a semantic search 200 that the application and/or system is running and listening to user's voice 300. A presentation is running, and the user has started presenting. The application and/or system is connected to the internet and a transcript 110 with slide numbers is stored in internal storage 500, cf. Fig. 3 above.

In an embodiment of the invention, the semantic search 200 allows the user to perform an advanced search within slides based on the transcript 110 of user's voice 300. For example, specific content can be found even if it is phrased differently than it is written in the slide but holds the same semantic meaning. Even images can be searched with this method, which has only synonyms of the speech input as their captions.

In an embodiment of the invention the application captures the user's voice 300 and filters 210 it from potential noises. The filtered speech will be transmitted through the API 301 to a cloud based online speech recognition service 302 which is configured to transform the speech and to return it in the text format, i.e. a transcription.

The transcription will be compared with the transcript 110 from internal storage 500 and gives in return the matching slide number 212. The slide number is the input for a basic command and the presentation application jumps to the specific slide 213.

After the slide change has been initiated, step 213, the application and/or system continues listening to user's voice 300. The cycle starts from the beginning.

Fig. 9 shows a detailed flowchart of a coaching system according to the embodiment shown in Fig. 5. As detailed in Fig. 5 the coaching system 800 is preferably a part of the preparation use case. However, the system may also be employed as a part of any other use case. It may also form an independent system.

In an embodiment of the invention audio 130 of the presentation is input into the coaching system 800. Low level audio features are extracted 801. One or more speech parameters are measured 802. The speech parameters comprise pace, volume, and/or pitch of the speech.

Subsequently the user's performance is analyzed based on the measured one or more of the following one or more speech parameters; the transcript 110; and a knowledge base 810. The knowledge base preferably comprises information about an optimal presentation and/or information about scientific standards.

Based on the performance analysis 803 a text report 804 and/or feedback information 805 is generated. The feedback information preferably comprises one or more of an audio, a text, an image, or a physical feedback.

In an embodiment of the invention, it is a prerequisite condition for a coaching system that the application and/or system the speech of a presentation is recorded and a corresponding transcription from an earlier presentation is provided. A custom knowledge base is preferably, adjustable by the user and further preferably incorporating scientific standards for an optimal presentation.

In an embodiment of the invention, the application and/or system is configured to record, analyze, and store speech of a presentation for further processing. Furthermore, the application and/or system may be configured to analyze the recorded and stored speech during the preparation-phase. The records can be used to analyze pace, volume and pitch. Based on the analysis results the application and/or system are configured to deduce which part of the presentation could attract/distract the attention of the audience. It is configured to highlight possible blind spots based on listing overused words or filler words e.g. "um", "you know", "so", "err". Ultimately the system is configured to act as a coach to help the user improving his/her staging skills.

In an embodiment of the invention, the application and/or system captures audio 130 and extracts low-level audio features 801, e.g. pace, volume, pitch of speech. Features are analyzed 803 based on an adjustable custom knowledge base 810, which preferably incorporates scientific standards. The transcript 110 is analyzed as well, e.g. most common words, to many repeats, filler word usage.

The further processing of the analysis results depends on the purpose of the user. In an embodiment of the invention a Text report will be generated 804, if the user would like to learn from the past presentation. Additionally or alternatively, a live feedback will be generated 805 if the user would like to receive it on the spot, i.e. during the practice phase.

In an embodiment of the invention, the feedback 805 is provided as an audio; e.g. beep, voice command; as a visual message, e.g. information about the overused words, the user is too quiet, too slow; or a physical feedback in case corresponding device, e.g. a smart watch or phone with a buzzer, is available.

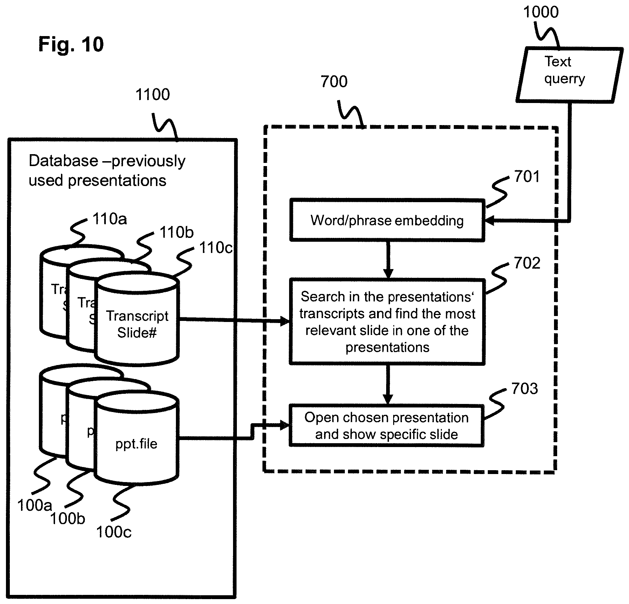

Fig. 10 shows a detailed flowchart of a presentation item/slide reusage system 700 according to the embodiment shown in Fig. 5. As detailed in Fig. 5 the slide reusage system 700 is preferably a part of the preparation use case. However, the system may also be employed as a part of any other use case. It may also form an independent system.

The reusage system 700 is configured to receive a text query 1000. The text query is processed based on a word and/or phrase embedding method 701. Subsequently a search for a relevant slide in a database 1100 is performed. The database preferably comprises one or more transcripts 110a, 110b, 110c, one or more respective slides and/or one or more presentation files 100a, 100b, 100c. Based on the result of the search 702 a specific slide is shown 703. The specific slide is preferably the most relevant slide of the slides found in the search 702. In a preferred embodiment a presentation file from the database 1100 is opened, preferably the presentation file comprising the specific slide.

In an embodiment of the invention it is a prerequisite condition of a slide reusage system 700 that the application and/or system maintains a database or internal storage of previously used presentations 100a, 110b, 100c and their embedded transcripts 110a, 110b, 110c.

In an embodiment of the invention, the application and/or system is configured to support the user with finding relevant presentation slides from past presentations that matches user's intention. Based on word/phrase embedding semantic similarity considered in the matching process, the system is configured to allow for selection of non-exact matches, cf. semantic search as described with respect to Fig. 4. This allows a user to be more productive in presentation factoring because the user doesn't need to create a presentation from the very beginning or search for a specific slide in a set of presentation files.

In an embodiment of the invention, a text query for searching in previously created presentations is proved from the user to the reusage system 700. The reusage system 700 is configured to embed the query; to search in the embedded presentation transcripts 110a, 110b, 110c; and to find the most relevant slide in one of the stored presentations 100a, 100b, 100c. The reusage system 700 is further configured to open the corresponding presentation file and to show the specific slide.

What has been described and illustrated herein are embodiments of the invention along with some variations. The terms, descriptions and figures used herein are set forth by way of illustration only and are not meant as limitations. Those skilled in the art will recognize that many variations are possible within the spirit and scope of the invention, which is intended to be defined by the following claims-and their equivalents-in which all terms are meant in their broadest reasonable sense unless otherwise indicated.

## Claims

1. A presentation control method, comprising the steps of:
continuously running a voice to text transformation of a voice input from a user;
detecting at least one spoken expression in the voice input;
selecting a specific presentation item out of a set of presentation items based on the detected spoken expression; and
executing an animation and/or change to the presentation item.

2. The method, preferably according to claim 1, further comprising the steps of:
capturing a video input of the user;
detecting at least one gesture of the user in the video input;
selecting a control command for the presentation based on the detected gesture; and
triggering an animation and/or the execution of the control command.

3. The method according to claim 1 or 2, further comprising the step of
continuously transcribing the voice input into a transcription of the presentation and/or using a word-embedding for the detecting at least one spoken expression.

4. The method according to any one of claims 1 to 3, further comprising the steps of:
capturing a voice input from the user;
transforming the voice input into a search phrase;
transferring the search phrase to a web search engine;
displaying the search results in a browser; and
returning to display the presentation, when receiving a return command via a further voice input.

5. The method according to any one of claims 1 to 4,
wherein selecting a specific presentation item out of a set of presentation items based on the spoken expression comprises searching in the transcription of the set of presentation items for an expression matching the detected spoken expression and selecting the most relevant slide based on the matching expression.

6. The method according to any one of claims 1 to 5, further comprising the steps of capturing a voice input from the user;
receiving a query for a search for a presentation item;
searching in a database comprising a least one presentation file and a transcription thereof for specific presentation items comprising a matching expression;
opening the presentation file from the database comprising the most relevant specific presentation item; and
displaying the most relevant specific slide.

7. The method according to any one of claims 1 to 6,
wherein continuously running a voice to text transformation of a voice input from a user and/or capturing a voice input from the user comprises
applying a noise filter and/or employing a trained language model for speech capturing and transcription.

8. The method according to any one of claim 1 to 7,
wherein the steps of continuously running a voice to text transformation of a voice input from a user and/or capturing a voice input from the user are performed by a cloud service via an application programming interface.

9. A presentation control system comprising:
voice to text transformation means for continuously running a voice to text transformation of a voice input from a user;
detection means for detecting at least one spoken expression in the voice input;
selection means for selecting a specific presentation item out of a set of presentation items based on the detected spoken expression; and
means for executing an animation and/or change to the presentation item, preferably configured to execute steps of the method according to any one of claims 1 to 8.

10. The system, according to claim 9, further comprising:
sensor means for capturing a voice input from a user and/or
sensor means for capturing a video input of the user; and
processing means, storage means, and communication means configured to execute the steps of the method according to any one of claims 1 to 8.

11. A presentation coaching system (800) comprising:
a presentation control system according to claim 9 or 10 preferably configured to receive a least one transcript of a presentation as input.

12. A presentation item reusage system (700) comprising:
a presentation control system according to claim 9 or 10, preferably configured to receive a least one transcript of a presentation as input.

13. A computer program comprising instructions to cause the system of claim 9 or 10 to execute the steps of the method according to any one of claims 1 to 8.

14. A computer-readable medium having stored thereon the computer program of claim 13.
